(19) Europäisches Patentamt / European Patent Office / Office européen des brevets

(11) **EP 4 484 922 A1**

(12) **EUROPEAN PATENT APPLICATION**
published in accordance with Art. 153(4) EPC

(43) Date of publication:
**01.01.2025 Bulletin 2025/01**

(21) Application number: **23779645.3**

(22) Date of filing: **15.03.2023**

(51) International Patent Classification (IPC):
**G01N 21/05** (2006.01)   **G01N 21/65** (2006.01)

(52) Cooperative Patent Classification (CPC):
**G01N 21/65; G01N 21/05;** G01N 2021/651;
G01N 2201/0639

(86) International application number:
**PCT/JP2023/010195**

(87) International publication number:
**WO 2023/189627 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.03.2022 JP 2022057534**

(71) Applicant: FUJIFILM Corporation
**Tokyo 106-8620 (JP)**

(72) Inventors:
• **YAMAMOTO, Takashi**
  **Ashigarakami-gun, Kanagawa 258-8577 (JP)**
• **NISHI, Takayuki**
  **Ashigarakami-gun, Kanagawa 258-8577 (JP)**
• **KOBAYASHI, Yuka**
  **Ashigarakami-gun, Kanagawa 258-8577 (JP)**
• **HASEGAWA, Masataka**
  **Ashigarakami-gun, Kanagawa 258-8577 (JP)**

(74) Representative: Hoffmann Eitle
**Patent- und Rechtsanwälte PartmbB
Arabellastraße 30
81925 München (DE)**

(54) **FLOW CELL AND MEASUREMENT METHOD**

(57)   A flow cell includes: a main body that includes a flow passage through which fluid containing a substance from which physical property data is to be measured flows, and contains a resin; and an optical system which is disposed on a part of a wall surface forming the flow passage and condenses measurement light for the physical property data and of which an emission surface for the measurement light is in contact with the fluid flowing through the flow passage, in which at least a part of an opposite wall surface that is the wall surface facing the optical system and at least a part of a side wall surface that is the wall surface interposed between the opposite wall surface and the optical system are covered with a metal.

FIG. 4

EP 4 484 922 A1

**Description**

BACKGROUND OF THE INVENTION

1. Field of the Invention

A technology of the present disclosure relates to a flow cell and a measuring method.

2. Description of the Related Art

A flow cell that includes a flow passage through which fluid flows and is used to measure physical property data of a substance present in the fluid is known. Some flow cells include an optical system that condenses measurement light for physical property data and takes in light returning from a substance irradiated with the measurement light. The fluid is, for example, a cell culture solution containing a cell product, such as an antibody, as the substance, and the physical property data is, for example, Raman spectral data.

JP2020-511635A discloses a flow cell that includes a ball lens as an optical system. The ball lens is disposed in an orifice provided in a wall surface forming a flow passage. An emission surface of the ball lens for measurement light is in contact with fluid flowing through the flow passage.

Claim 13 and the like of JP2020-511635A disclose that a main body of a flow cell including a flow passage may contain a resin (described as a polymer in JP2020-511635A). Further, Paragraph [0037] and Fig. 3 of JP2020-511635A disclose that a wall surface of the flow passage facing the optical system is covered with a metal to prevent the main body of the flow cell from adversely affecting physical property data.

SUMMARY OF THE INVENTION

JP2020-511635A proposes covering the wall surface of the flow passage, which faces the optical system, with a metal as a measure for preventing the main body of the flow cell from adversely affecting the physical property data as described above. However, covering the wall surface of the flow passage, which faces the optical system, with a metal is not sufficient as the measure for preventing the main body of the flow cell from adversely affecting the physical property data.

One embodiment according to the technology of the present disclosure provides a flow cell and a measuring method that can reduce an adverse influence of a main body on physical property data as compared to the related art.

A flow cell according to an aspect of the present disclosure comprises: a main body that includes a flow passage through which fluid containing a substance from which physical property data is to be measured flows, and contains a resin; and an optical system which is disposed on a part of a wall surface forming the flow passage and condenses measurement light for the physical property data and of which an emission surface for the measurement light is in contact with the fluid flowing through the flow passage. At least a part of an opposite wall surface that is the wall surface facing the optical system and at least a part of a side wall surface that is the wall surface interposed between the opposite wall surface and the optical system are covered with a metal.

It is preferable that an area of the metal covering the opposite wall surface is larger than an area of a region of the opposite wall surface irradiated with the measurement light.

It is preferable that a surface roughness of the opposite wall surface is 1.6 $\mu$m or less.

It is preferable that, in a case where a side of the flow passage on which the optical system is disposed is defined as an upper side and a side of the flow passage corresponding to the opposite wall surface is defined as a lower side, the opposite wall surface is a curved surface convex toward the lower side.

It is preferable that a flow rate of the fluid flowing through the flow passage is 200 cc/min or more, and, in a case where a distance between a first point at which the emission surface and an optical axis intersect with each other and a second point at which the opposite wall surface and the optical axis intersect with each other is denoted by L, "L $\leq$ 1.5 mm" is satisfied.

It is preferable that, in a case where a distance between a first point at which the emission surface and an optical axis intersect with each other and a condensing position of the measurement light is denoted by d and a distance between the first point and a second point at which the opposite wall surface and the optical axis intersect with each other is denoted by L, "(L/d) >_ 3.5" is satisfied.

It is preferable that "d = 0.6 mm" is satisfied and "L $\geq$ 2.1 mm" is satisfied.

It is preferable that at least a part of the main body is transparent and the fluid flowing through the flow passage is visible from an outside.

It is preferable that the transparent portion is a portion not irradiated with the measurement light.

It is preferable that, in a case where a distance between a first point at which the emission surface and an optical axis intersect with each other and a second point at which the opposite wall surface and the optical axis intersect with each other is denoted by L, a size of the transparent portion is larger than L.

It is preferable that an outline of a cross-sectional shape of the flow passage as viewed in a direction in which the fluid flows is a curve.

It is preferable that a resin content of the main body is 95% or more.

It is preferable that the physical property data is Raman spectral data.

Further, a flow cell according to another aspect of the present disclosure comprises: a main body that includes a flow passage through which fluid containing a substance from which physical property data is to be measured flows, and contains a resin; and an optical system which is disposed on a part of a wall surface forming the flow passage and condenses measurement light for the physical property data and of which an emission surface for the measurement light is in contact with the fluid flowing through the flow passage. In a case where a distance between a first point at which the emission surface and an optical axis intersect with each other and a condensing position of the measurement light is denoted by d and a distance between the first point and a second point at which an opposite wall surface that is the wall surface facing the optical system and the optical axis intersect with each other is denoted by L, "(L/d) ≥ 3.5" is satisfied.

A measuring method according to still another aspect of the present disclosure measures the physical property data using the flow cell described above.

It is preferable that the fluid is a cell culture solution. In this case, it is preferable that the cell culture solution contains a cell product as the substance.

It is preferable that the cell culture solution is obtained from a culture vessel in which culture is being performed. Further, it is preferable that the cell culture solution is a solution from which cells have been removed.

According to the technology of the present disclosure, it is possible to provide a flow cell and a measuring method that can reduce an adverse influence of a main body on physical property data as compared to the related art.

BRIEF DESCRIPTION OF THE DRAWINGS

Fig. 1 is a diagram showing an aspect where Raman spectral data of a substance present in a cell culture solution obtained from a culture vessel in which culture is being performed is measured.
Fig. 2 is an exploded perspective view of the flow cell.
Fig. 3 is a cross-sectional view of the flow cell.
Fig. 4 is a cross-sectional view of the flow cell.
Fig. 5 is a diagram showing a relationship between a metal covering an opposite wall surface and excitation light on the opposite wall surface.
Fig. 6 is a cross-sectional view of a flow cell according to a second embodiment.
Fig. 7 is a perspective view of a flow cell according to a third embodiment.
Fig. 8 is a table in which items of conditions in Examples and Comparative examples are summarized.
Fig. 9 is a table in which items of evaluation in Examples and Comparative examples are summarized.

DESCRIPTION OF THE PREFERRED EMBODIMENTS

[First embodiment]

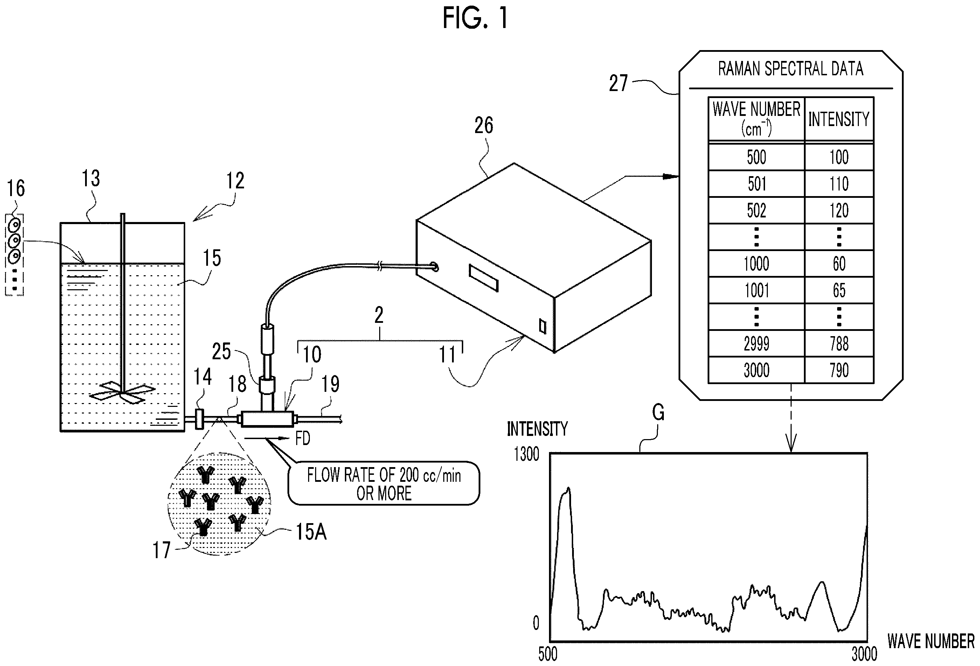

For example, a measurement system 2 comprises a flow cell 10 and a Raman spectrometer 11 as shown in Fig. 1. The measurement system 2 is incorporated into, for example, a cell culture unit 12 of a system for manufacturing a drug substance of a biopharmaceutical. The cell culture unit 12 includes a culture vessel 13 and a cell-removing filter 14. A cell culture solution 15 is stored in the culture vessel 13.

An antibody-producing cell 16 is seeded in the culture vessel 13, and is cultured in the cell culture solution 15. The antibody-producing cell 16 is, for example, a cell established by incorporating an antibody gene into a host cell such as Chinese hamster ovary (CHO) cells. The antibody-producing cell 16 produces immunoglobulin, that is, an antibody 17 in a culture process. For this reason, not only the antibody-producing cell 16 but also the antibody 17 is present in the cell culture solution 15. The antibody 17 is, for example, a monoclonal antibody, and is an active ingredient of a biopharmaceutical. The antibody 17 is an example of "a substance" and "a cell product" according to a technology of the present disclosure.

A first sending passage 18 is connected to the culture vessel 13. The cell-removing filter 14 is disposed in the first sending passage 18. The cell-removing filter 14 captures the antibody-producing cell 16 contained in the cell culture solution 15 with a filter membrane (not shown) using, for example, a tangential flow filtration (TFF) method and removes the antibody-producing cell 16 from the cell culture solution 15. Further, the cell-removing filter 14 transmits the antibody 17. For this reason, the cell culture solution 15 mainly containing the antibody 17 flows downstream of the cell-removing filter 14 of the first sending passage 18. The cell culture solution 15 from which the antibody-producing cell 16 has been removed by the cell-removing filter 14 in this way is called culture supernatant liquid. Hereinafter, the cell culture solution 15 from which the antibody-producing cell 16 has been removed by the cell-removing filter 14 will be referred to as culture supernatant liquid 15A. The culture supernatant liquid 15A is an example of "fluid" according to the technology of the present disclosure.

The culture supernatant liquid 15A also contains impurities, such as cell-derived protein, cell-derived deoxyribonucleic acid (DNA), and an aggregate of the antibody 17, or viruses and the like, in addition to the antibody 17. The impurities are also an example of "a substance" and "a cell product" according to the technology of the present disclosure. Further, viruses and the like are also an example of "a substance" according to the technology of the present disclosure.

The flow cell 10 is connected to the first sending passage 18 on the downstream side of the cell-removing filter 14. The culture supernatant liquid 15A from the first sending passage 18 flows through the flow cell 10 as shown by an arrow FD. A sending pump (not shown) is provided downstream of the cell-removing filter 14 of the first sending passage 18 (between the cell-removing filter 14 and the flow cell 10). The sending pump sends the culture supernatant liquid 15A toward the flow cell 10 at a flow rate of 200 cc/min or more, for example, 300 cc/min.

A second sending passage 19 is also connected to the flow cell 10. The culture supernatant liquid 15A that has flowed into the flow cell 10 from the first sending passage 18 flows out to the second sending passage 19. The second sending passage 19 is connected to, for example, a purification unit that purifies the antibody 17 from the culture supernatant liquid 15A using a chromatography device, and sends the culture supernatant liquid 15A from the flow cell 10 to the purification unit. The first sending passage 18 may be connected to the purification unit, and a branch passage may be provided downstream of the cell-removing filter 14 of the first sending passage 18. Then, the flow cell 10 may be connected to the branch passage, and the culture supernatant liquid 15A that has flowed through the flow cell 10 may be disposed of. Alternatively, the second sending passage 19 may be connected to the culture vessel 13, and the culture supernatant liquid 15A that has flowed through the flow cell 10 may be returned to the culture vessel 13.

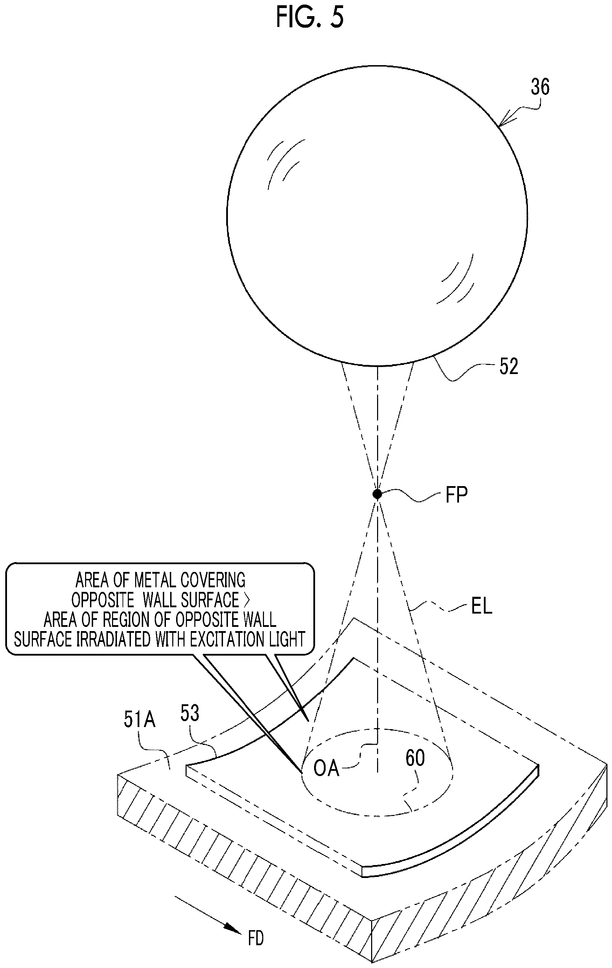

The Raman spectrometer 11 is an apparatus that evaluates a substance using characteristics of Raman scattered light. In a case where a substance is irradiated with excitation light EL (see Fig. 5), Raman scattered light having a wavelength different from that of the excitation light EL is generated due to an interaction between the excitation light EL and the substance. A difference in wavelength between the excitation light EL and the Raman scattered light corresponds to the energy of molecular vibration of the substance. For this reason, it is possible to obtain Raman scattered light having different wave numbers between substances having different molecular structures. The excitation light EL is an example of "measurement light" according to the technology of the present disclosure. Of a Stokes line and an anti-Stokes line, it is preferable to use the Stokes line as the Raman scattered light.

The Raman spectrometer 11 includes a sensor unit 25 and an analyzer 26. A distal end of the sensor unit 25 is connected to the flow cell 10. The sensor unit 25 emits the excitation light EL from an emission port provided at the distal end thereof. The culture supernatant liquid 15A that flows in the flow cell 10 is irradiated with the excitation light EL. Raman scattered light is generated due to an interaction between the excitation light EL and the antibody 17 or the like contained in the culture supernatant liquid 15A. The sensor unit 25 receives the Raman scattered light and outputs the received Raman scattered light to the analyzer 26. In the present embodiment, laser light was used as the excitation light EL, an output of the laser light was set to 500 mW, a central wavelength thereof was set to 785 nm, an irradiation time thereof was set to 1 second, and the number of times of integration thereof was set to 10. Further, a diameter of the laser light was set to 3.50 mm.

The analyzer 26 decomposes the Raman scattered light for each wave number and derives an intensity of the Raman scattered light for each wave number to generate Raman spectral data 27. The Raman spectral data 27 is an example of "physical property data" according to the technology of the present disclosure. The analyzer 26 is connected to an information processing apparatus (not shown) through a computer network, such as a local area network (LAN), to be capable of communicating with the information processing apparatus. The analyzer 26 transmits the generated Raman spectral data 27 to the information processing apparatus. The information processing apparatus is, for example, a personal computer. The information processing device derives the concentration or the compositional ratio of the antibody 17 or the like contained in the culture supernatant liquid 15A on the basis of the Raman spectral data 27 transmitted from the analyzer 26, and displays a result thereof on a display.

The Raman spectral data 27 is data in which the intensity of the Raman scattered light for each wave number is registered. In Fig. 1, the Raman spectral data 27 is data in which an intensity of scattered light in a wave number range of 500 cm$^{-1}$ to 3000 cm$^{-1}$ is derived in units of 1 cm$^{-1}$. A graph G shown below the Raman spectral data 27 is a graph that is obtained in a case where the intensity of the Raman spectral data 27 is plotted for each wave number and the plotted points are connected with a line.

In this way, the measurement system 2 allows the culture supernatant liquid 15A, which is obtained from the culture vessel 13 in which the antibody-producing cell 16 is being cultured, to flow into the flow cell 10. Then, the culture supernatant liquid 15A flowing through the flow cell 10 is irradiated with the excitation light EL through the sensor unit 25, so that the Raman spectral data 27 of the antibody 17 or the like contained in the culture supernatant liquid 15A is measured.

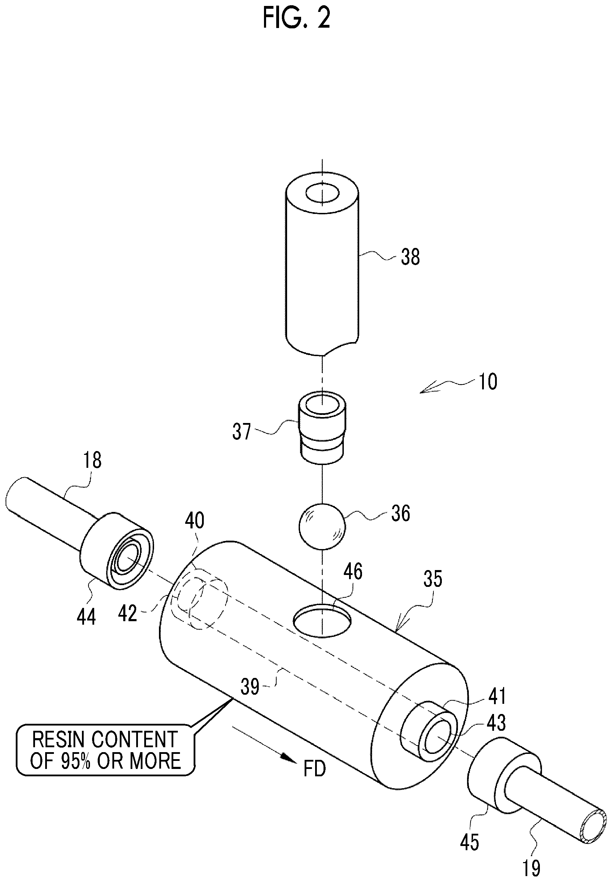

For example, the flow cell 10 includes a main body 35, a ball lens 36, a lens presser 37, and a sensor unit connector 38 as shown in Fig. 2. The main body 35 is a cylindrical member that includes a flow passage 39 provided at a center therein and having a linear shape and a circular cross-sectional shape. The main body 35 contains a resin. A resin content of the main body 35 is 95% or more. The resin content is, for example, 99%, and the main body 35 is made entirely of a resin. The resin is, for example, a polyolefin-based resin or the like.

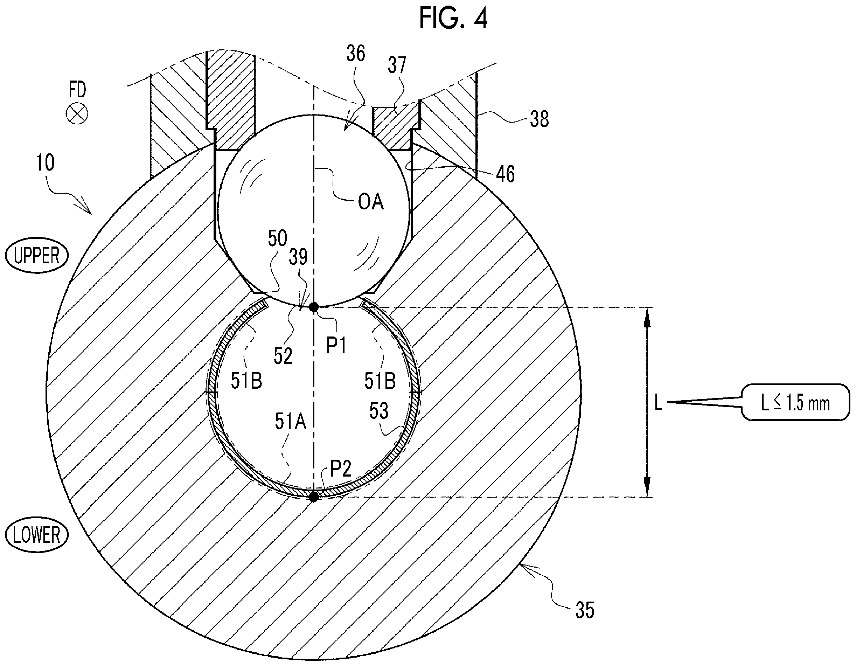

A first connecting portion 40 and a second connecting portion 41 having the shape of a cylindrical boss are provided at centers of both end surfaces of the main body 35. The first connecting portion 40 includes an inlet 42 of the flow passage 39, and the second connecting portion 41 includes an outlet 43 of the flow passage 39. A direction parallel to the flow passage 39 from the inlet 42 toward the outlet 43 is a direction FD in which the culture supernatant liquid 15A flows. The direction FD is an example of "a direction in which the fluid flows" according to the technology of the present disclosure. Since the flow passage 39 has a circular cross-sectional shape as described above, an outline of the cross-sectional shape of the flow passage 39 as viewed in the direction FD is a curve (see also Fig. 4). In other words, the flow passage 39 as viewed in the direction FD has a shape without corners.

The first connecting portion 40 and the second connecting portion 41 are parallel threads or taper threads. A sterile connector 44 provided at one end of the first sending passage 18 is liquid-tightly mounted on the first connecting portion 40. Further, a sterile connector 45 provided at one end of the second sending passage 19 is liquid-tightly mounted on the second connecting portion 41.

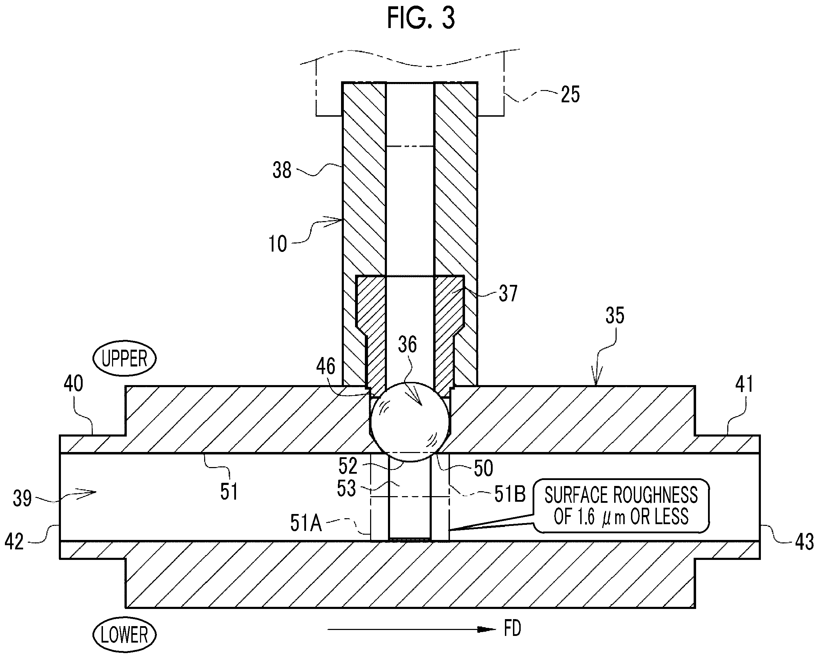

A lens housing hole 46 is formed in the middle of the peripheral surface of the main body 35. The ball lens 36 is housed in the lens housing hole 46. The lens housing hole 46 penetrates the flow passage 39 (see Fig. 3 and the like).

The ball lens 36 is literally a lens having a spherical shape, and is made of, for example, quartz glass. The ball lens 36 condenses the excitation light EL emitted from the sensor unit 25 and takes the Raman scattered light, which is generated due to the interaction between the excitation light EL and the antibody 17 or the like contained in the culture supernatant liquid 15A, into the sensor unit 25. The ball lens 36 is an example of "an optical system" according to the technology of the present disclosure.

The lens presser 37 has substantially the shape of a cylinder of which a distal end is slightly narrowed. A distal end of the lens presser 37 is inserted into the lens housing hole 46 (see Fig. 3 and the like). The distal end of the lens presser 37 is in contact with the ball lens 36 housed in the lens housing hole 46. Accordingly, the lens presser 37 presses the ball lens 36 such that the ball lens 36 is not moved in the lens housing hole 46.

The sensor unit connector 38 has the shape of a cylinder that is slightly larger than the lens presser 37. The lens presser 37 is press-fitted into the sensor unit connector 38 (see Fig. 3 and the like). That is, the lens presser 37 is an inner sleeve, and the sensor unit connector 38 is an outer sleeve. The sensor unit connector 38 is integrated with the main body 35 by, for example, adhesion using an adhesive, heat welding, or the like. The distal end of the sensor unit 25 is attachably and detachably connected to the sensor unit connector 38 (see Fig. 3). The lens presser 37 and the sensor unit connector 38 also contain a resin at a content of 95% or more, like the main body 35. The lens presser 37 and the sensor unit connector 38 may be integrated with each other. Further, the sensor unit connector 38 may be attachable to and detachable from the main body 35.

For example, as shown in Figs. 3 and 4, the ball lens 36 is seated in an orifice 50. The orifice 50 is formed in a wall surface 51 of the flow passage 39 corresponding to the lens housing hole 46, and is a connection port between the flow passage 39 and the lens housing hole 46. The orifice 50 is an example of "a part of the wall surface" according to the technology of the disclosed technology. The ball lens 36 is seated in the orifice 50, so that an emission surface 52 thereof protrudes from the orifice 50 into the flow passage 39. For this reason, the emission surface 52 is in contact with the culture supernatant liquid 15A that flows through the flow passage 39.

The orifice 50 is liquid-tightly closed by the ball lens 36. Specifically, a contact portion between the ball lens 36 and the orifice 50 is sealed with a resin, wax, solder, or the like. Alternatively, an O-ring, a gasket, or the like is interposed between the ball lens 36 and the orifice 50. Accordingly, it is possible to prevent the culture supernatant liquid 15A, which flows through the flow passage 39, from leaking into the lens housing hole 46.

The wall surface 51 forming the flow passage 39 includes an opposite wall surface 51A that faces the ball lens 36 and side wall surfaces 51B that are interposed between the opposite wall surface 51A and the ball lens 36. A width of the opposite wall surface 51A in the direction FD is equal to a diameter of the ball lens 36. The opposite wall surface 51A is a region of a lower half in a case where a side of the flow passage 39 on which the ball lens 36 is disposed is defined as an upper side. A width of each of the side wall surfaces 51B in the direction FD is also equal to the diameter of the ball lens 36, as in the case of the opposite wall surface 51A. The side wall surfaces 51B are a part of the wall surface 51 from the opposite wall surface 51A to the orifice 50 and is a region of an upper half of the flow passage 39. As described above, the cross-sectional shape of the flow passage 39 as viewed in the direction FD is a circular shape. For this reason, in a case where the side of the flow passage 39 on which the ball lens 36 is disposed is defined as an upper side and a side of the flow passage 39 corresponding to the opposite wall surface 51A is defined as a lower side, the opposite wall surface 51A is a curved surface that is convex toward the lower side.

A part of the opposite wall surface 51A and the side wall surfaces 51B are covered with a metal 53. The metal 53 is a thin film made of, for example, aluminum, copper, gold, or the like, and is formed on the opposite wall surface 51A and the side wall surfaces 51B by plating. The metal 53 continues from the opposite wall surface 51A to the side wall surfaces 51B in front of the orifice 50 without interruption. Further, a surface roughness (arithmetic average roughness) Ra of the opposite wall surface 51A is 6.4 $\mu$m or less (Ra $\leq$ 6.4 $\mu$m), and preferably 1.6 $\mu$m or less (Ra $\leq$ 1.6 $\mu$m). Although not shown, a surface roughness Ra of the side wall surface 51B is also 6.4 $\mu$m or less, and preferably 1.6 $\mu$m or less. The opposite wall surface 51A and the side wall surfaces 51B are subjected to a smoothing treatment such as polishing to set the surface roughness Ra to a target value. The surface roughness Ra is a value measured in accordance with JIS B 0601-2001 specified in Japanese Industrial Standards.

In Fig. 4, a point at which the emission surface 52 of the ball lens 36 and an optical axis OA intersect with each other is referred to as a first point P1, and a point at which the opposite wall surface 51A and the optical axis OA intersect with each other is referred to as a second point P2. A distance between the first point P1 and the second point P2 is denoted by L. In this case, "L ≤ 1.5 mm" is satisfied. For this reason, since a flow rate of the culture supernatant liquid 15A flowing through the flow passage 39 is 200 cc/min or more as shown in Fig. 1, and the viscosity of the culture supernatant liquid 15A is 0.001 Pa s which is equal to that of water, a Reynolds number Re in the vicinity of the emission surface 52 of the ball lens 36 and the opposite wall surface 51A is 2300 or more (Re ≥ 2300). Therefore, turbulence occurs in the culture supernatant liquid 15A that flows in the vicinity of the emission surface 52 of the ball lens 36 and the opposite wall surface 51A.

For example, as shown in Fig. 5, excitation light EL emitted from the emission surface 52 of the ball lens 36 is condensed at a condensing position FP in the flow passage 39. The condensing position FP is determined depending on a diameter, a refractive index, a focal length, and the like of the ball lens 36. The condensing position FP in this case has a dot shape. The excitation light EL having passed through the condensing position FP spreads conically from the condensing position FP toward the opposite wall surface 51A and is finally emitted to the opposite wall surface 51A. Reference numeral 60 denotes an irradiation region of the opposite wall surface 51A that is irradiated with the excitation light EL. The irradiation region 60 is a circle centered on the optical axis OA. A diameter of the irradiation region 60 is smaller than a width of the metal 53, which covers the opposite wall surface 51A, in the direction FD. In other words, an area of the metal 53 covering the opposite wall surface 51A is larger than an area of the region of the opposite wall surface 51A irradiated with the excitation light EL) (the area of the metal 53 covering the opposite wall surface 51A >the area of the region of the opposite wall surface 51A irradiated with the excitation light EL). In a case where the diameter of the ball lens 36 is denoted by DB, the focal length thereof is denoted by f, and the diameter of the excitation light EL incident on the ball lens 36 is denoted by DE, a diameter DR of the irradiation region 60 can be calculated by the following equation using the above-described distance L.

$$DR = (DE/f) \times \{L - f + (DB/2)\}$$

Next, the action obtained from the above-mentioned configuration will be described. The measurement system 2 consisting of the flow cell 10 and the Raman spectrometer 11 is incorporated into the cell culture unit 12. The first connecting portion 40 of the flow cell 10 is connected to the first sending passage 18 and the second connecting portion 41 thereof is connected to the second sending passage 19, and the sensor unit 25 of the Raman spectrometer 11 is connected to the sensor unit connector 38. The culture supernatant liquid 15A, which is obtained from the culture vessel 13 in which the antibody-producing cell 16 is being cultured, is caused to flow in the flow passage 39 of the flow cell 10. The culture supernatant liquid 15A that flows through the flow passage 39 is irradiated with the excitation light EL through the sensor unit 25 and the ball lens 36. The excitation light EL is condensed at the condensing position FP in the flow passage 39.

Raman scattered light is generated due to an interaction between the excitation light EL and the antibody 17 or the like contained in the culture supernatant liquid 15A. The Raman scattered light is taken into the sensor unit 25 by the ball lens 36 and is output from the sensor unit 25 to the analyzer 26. The Raman scattered light is converted into the Raman spectral data 27 by the analyzer 26.

As shown in Fig. 5, the opposite wall surface 51A positioned beyond the condensing position FP is irradiated with the excitation light EL emitted from the emission surface 52 of the ball lens 36. Further, the side wall surfaces 51B interposed between the ball lens 36 and the opposite wall surface 51A are also irradiated with the excitation light EL.

As shown in Fig. 2, the resin content of the main body 35 is 95% or more. The intensity of the Raman scattered light generated due to an interaction between the excitation light EL and the resin is relatively high. For this reason, as it is, Raman scattered light to be originally measured that is generated due to the interaction between the excitation light EL and the antibody 17 or the like contained in the culture supernatant liquid 15A is canceled out by the Raman scattered light that is generated due to the interaction between the excitation light EL and the resin of the opposite wall surface 51A and the side wall surfaces 51B. That is, an S/N ratio of the Raman spectral data 27 caused by the Raman scattered light that is generated due to the interaction between the excitation light EL and the antibody 17 or the like contained in the culture supernatant liquid 15A is significantly reduced.

However, in the technology of the present disclosure, a part of the opposite wall surface 51A and a part of the side wall surfaces 51B are covered with the metal 53. The intensity of the Raman scattered light generated due to an interaction between the excitation light EL and the metal 53 is extremely low as compared to the case of the resin. For this reason, there is less concern that the Raman scattered light to be originally measured, which is generated due to the interaction between the excitation light EL and the antibody 17 or the like contained in the culture supernatant liquid 15A, may be canceled out, as compared to JP2020-511635A in which only the opposite wall surface 51A is covered with the metal 53. That is, the S/N ratio of the Raman spectral data 27 caused by the Raman scattered light that is generated due to the interaction between the excitation light EL and the antibody 17 or the like contained in the culture supernatant liquid 15A can be maintained at a higher level. Therefore, it is possible to reduce an adverse influence of the main body 35 on the Raman spectral data 27 as compared to the related art.

As shown in Fig. 5, the area of the metal 53 covering the opposite wall surface 51A is larger than the area of the region of the opposite wall surface 51A irradiated with the excitation light EL. For this reason, it is possible to reduce a concern that the resin of the opposite wall surface 51A may be irradiated with the excitation light EL and Raman scattered light may be generated due to the interaction between the excitation light EL and the resin of the opposite wall surface 51A.

As shown in Fig. 3, the surface roughness of the opposite wall surface 51A is 1.6 $\mu$m or less. For this reason, it is possible to reduce a concern that the S/N ratio of the Raman spectral data 27 may be reduced due to the diffusion of the excitation light EL and the Raman scattered light caused by the opposite wall surface 51A and the metal 53 covering the opposite wall surface 51A.

As shown in Fig. 4, in a case where the side of the flow passage 39 on which the ball lens 36 is disposed is defined as an upper side and a side of the flow passage 39 corresponding to the opposite wall surface 51A is defined as a lower side, the opposite wall surface 51A is a curved surface that is convex toward the lower side. Since the opposite wall surface 51A serves as a reflecting surface that directs the Raman scattered light to the ball lens 36, the S/N ratio of the Raman spectral data 27 can be further increased.

As shown in Fig. 1, the flow rate of the culture supernatant liquid 15A flowing through the flow passage 39 is 200 cc/min or more. Further, in a case where the distance between the first point P1 at which the emission surface 52 of the ball lens 36 and the optical axis OA intersect with each other and the second point P2 at which the opposite wall surface 51A and the optical axis OA intersect with each other is denoted by L, "L ≤ 1.5 mm" is satisfied as shown in Fig. 4. For this reason, as described above, turbulence occurs in the culture supernatant liquid 15A that flows in the vicinity of the emission surface 52 of the ball lens 36 and the opposite wall surface 51A. Accordingly, a component deviation in the culture supernatant liquid 15A in the vicinity of the emission surface 52 of the ball lens 36 and the opposite wall surface 51A is reduced, so that the measurement stability of the Raman spectral data 27 can be improved.

As shown in Fig. 4, an outline of the cross-sectional shape of the flow passage 39 as viewed in the direction FD in which the culture supernatant liquid 15A flows is a curve. For this reason, it is possible to reduce a concern that air bubbles hindering the flow of the culture supernatant liquid 15A may be generated.

As shown in Fig. 2, the resin content of the main body 35 is 95% or more. In this case, since the intensity of the Raman scattered light generated due to the interaction between the excitation light EL and the resin is further increased, an effect obtained by covering the opposite wall surface 51A and the side wall surfaces 51B with the metal 53 can be further exhibited. Further, the main body 35 can be manufactured at a low cost and can be easily disposed of as compared to a case where metal is used as the material of the main body 35. For this reason, the flow cell 10 can be used as a single-use product. Furthermore, the heat insulating property of the main body 35 can be enhanced, and the deterioration of the culture supernatant liquid 15A, which flows through the flow passage 39, caused by a temperature can be prevented.

The Raman scattered light is likely to reflect information derived from a functional group of amino acid of protein. For this reason, in a case where the Raman spectral data 27 is used as physical property data as in this example, it is possible to derive a physical property value, such as the concentration of the antibody 17 which is protein, with high accuracy.

A biopharmaceutical including the antibody 17, which is a cell product, is called an antibody drug and is widely used not only for the treatment of chronic diseases, such as cancer, diabetes, and rheumatoid arthritis, but also for the treatment of rare diseases, such as hemophilia and a Crohn's disease. For this reason, according to this example in which the culture supernatant liquid 15A, which is obtained from the culture vessel 13 in which the antibody-producing cell 16 is being cultured and serves as a source of an antibody drug, is used as the fluid, it is possible to promote the development of the antibody drug that is widely used for the treatment of various diseases.

In this example, the culture supernatant liquid 15A, which is obtained from the culture vessel 13 in which culture is being performed, is used as the fluid. For this reason, it is possible to measure the Raman spectral data 27 while continuing to culture the antibody-producing cell 16 in the culture vessel 13. Further, the cell culture solution is culture supernatant liquid 15A from which the antibody-producing cell 16 has been removed. For this reason, it is possible to accurately detect Raman spectrum of the antibody 17 or the like that is a cell product.

[Second embodiment]

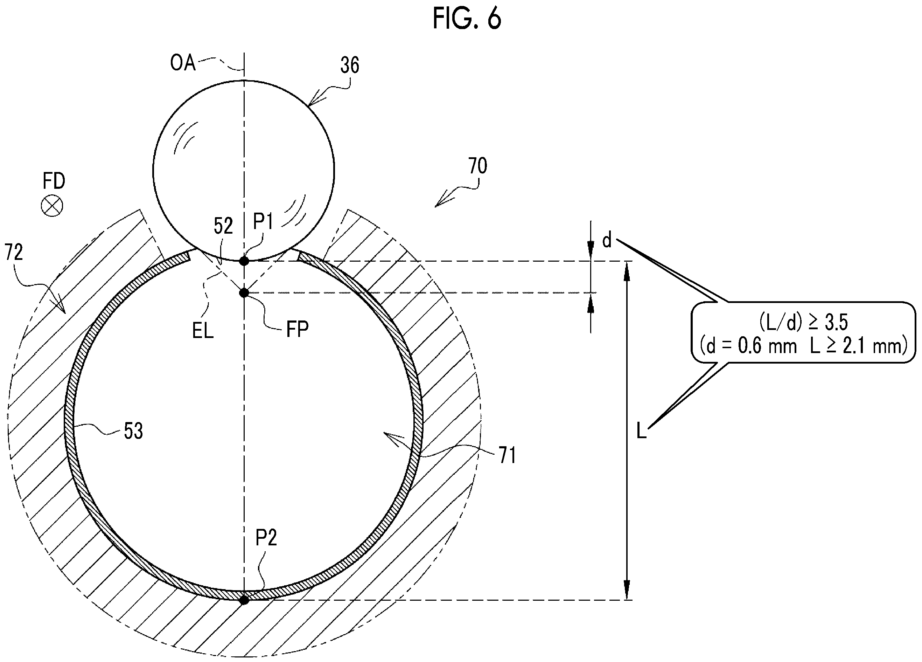

For example, as shown in Fig. 6, a flow cell 70 according to a second embodiment comprises a main body 72 in which a flow passage 71 described below is formed. That is, in a case where a distance between the first point P1 at which the above-described emission surface 52 and the optical axis OA intersect with each other and the condensing position FP of the excitation light EL is denoted by d, "(L/d) ≥ 3.5" is satisfied. This inequation means that the distance L between the emission surface 52 and the opposite wall surface 51A is 3.5 times or more the distance d between the emission surface 52 and the condensing position FP. More specifically, "d = 0.6 mm" and "L ≥ 2.1 mm ((L/d) ≥ 3.5)" are satisfied.

In a case where the distance L between the emission surface 52 and the opposite wall surface 51A is increased as compared to the distance d between the emission surface 52 and the condensing position FP in this way, the amount of the excitation light EL reaching the opposite wall surface 51A and the side wall surfaces 51B can be reduced. Therefore, it is possible to further reduce an adverse influence of the main body 72 on the Raman spectral data 27 as compared to the related art.

The distance L between the emission surface 52 and the opposite wall surface 51A may be further increased to reduce the adverse influence of the main body 72 on the Raman spectral data 27. For this reason, "(L/d) >_ 4.7" is preferably satisfied, "(L/d) >_ 10" is more preferably satisfied, "(L/d) >_ 30" is even more preferably satisfied, and "(L/d) >_ 50" is still more preferably satisfied. However, in a case where the distance L is increased, the main body 72 and the flow cell 70 are increased in size and the handleability of the flow cell 70 thus deteriorates. For this reason, the distance L may not be increased blindly.

In the second embodiment, at least a part of the opposite wall surface 51A and at least a part of the side wall surfaces 51B do not have to be covered with the metal 53.

[Third embodiment]

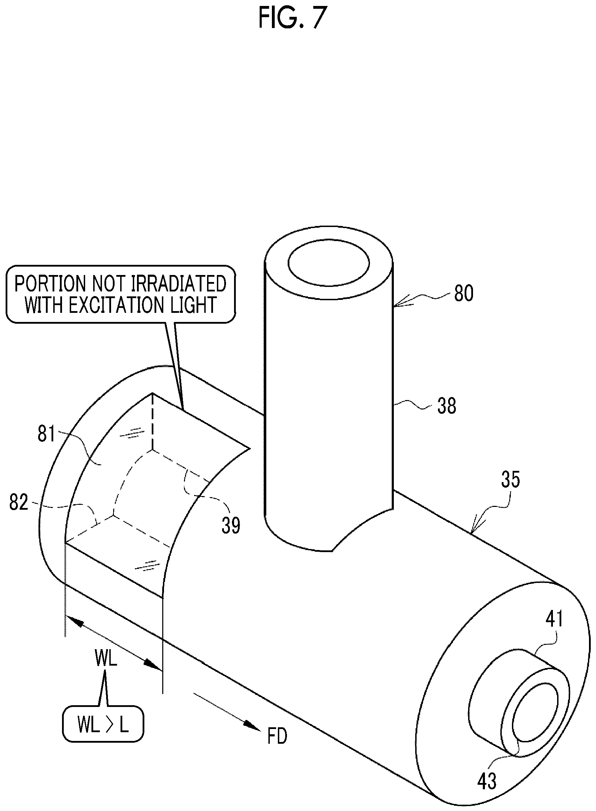

For example, as shown in Fig. 7, a flow cell 80 according to a third embodiment is the same as the flow cell 10 according to the first embodiment except that a transparent window 81 is mounted on the main body 35. The transparent window 81 is an example of "a transparent portion" according to the technology of the disclosed technology. The transparent window 81 is fitted to an opening portion 82 formed at a portion of the main body 35 that is not irradiated with the excitation light EL. The opening portion 82 communicates with the wall surface 51 of the flow passage 39 from the peripheral surface of the main body 35. For this reason, the back surface of the transparent window 81 forms a part of the flow passage 39. The transparent window 81 is made of, for example, a resin having a visible light transmittance of 95% or more, and allows the culture supernatant liquid 15A, which flows through the flow passage 39, to be visible from the outside.

Here, the portion that is not irradiated with the excitation light EL is specifically a portion other than portions corresponding to the opposite wall surface 51A and the side wall surfaces 51B. In Fig. 7, a portion close to the first connecting portion 40 (not shown) as viewed from the sensor unit connector 38 or the like is illustrated as the portion that is not irradiated with the excitation light EL.

The shape of the transparent window 81 in a case where the main body 35 is viewed from the side is a rectangular shape. Further, a cross-sectional shape of the transparent window 81 as viewed in the direction FD is a fan shape. A length WL of a short side of the transparent window 81 is longer than the distance L between the first point P1 and the second point P2 (WL > L). That is, a size of the transparent window 81 is larger than the distance L. The length WL is an example of "a size of a transparent portion" according to the technology of the present disclosure.

As described above, in the third embodiment, at least a part of the main body 35 is transparent, and the culture supernatant liquid 15A flowing through the flow passage 39 is visible from the outside. For this reason, it is possible to visually check whether air bubbles hindering the flow of the culture supernatant liquid 15A are not generated in the flow passage 39, and the like. Further, in a case where air bubbles are generated, it is possible to take a measure of releasing the air bubbles from the flow passage 39, such as lightly tapping the flow cell 80 or temporarily increasing the flow velocity of the culture supernatant liquid 15A.

The transparent portion is a portion not irradiated with the excitation light EL. For this reason, it is possible to prevent the S/N ratio of the Raman spectral data 27 from being reduced due to the transparent portion.

Further, the size of the transparent portion is larger than the distance L. For this reason, the visibility of the culture supernatant liquid 15A flowing through the flow passage 39 can be improved.

The flow passage 39 may be imaged with a camera through the transparent window 81 and the image captured by the camera may be subjected to image analysis to detect whether or not air bubbles are generated in the flow passage 39. In this case, in a case where it is detected that air bubbles are generated, an operator may be notified of this detection result and/or the flow velocity of the culture supernatant liquid 15A may be automatically temporarily increased. Further, in a case where it is detected that air bubbles are generated during the measurement of the Raman spectral data 27, the measured Raman spectral data 27 may be treated as error data.

The entire main body 35 may be made of a transparent resin, and the entire main body 35 may be used as the transparent portion. Further, the transparent portion may have a circular shape or an elliptical shape. In a case where the transparent portion has a circular shape, the size of the transparent portion is a diameter of a circle. In a case where the transparent portion has an elliptical shape, the size of the transparent portion is a length of a minor axis of an ellipse.

Examples

Hereinafter, Examples and Comparative examples of the technology of the present disclosure will be described.

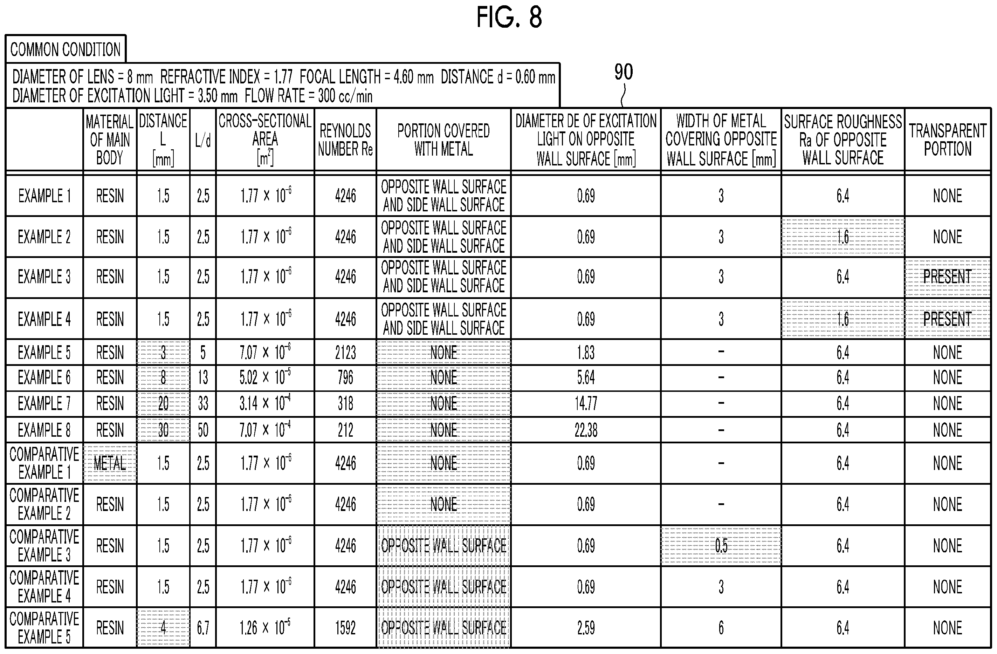

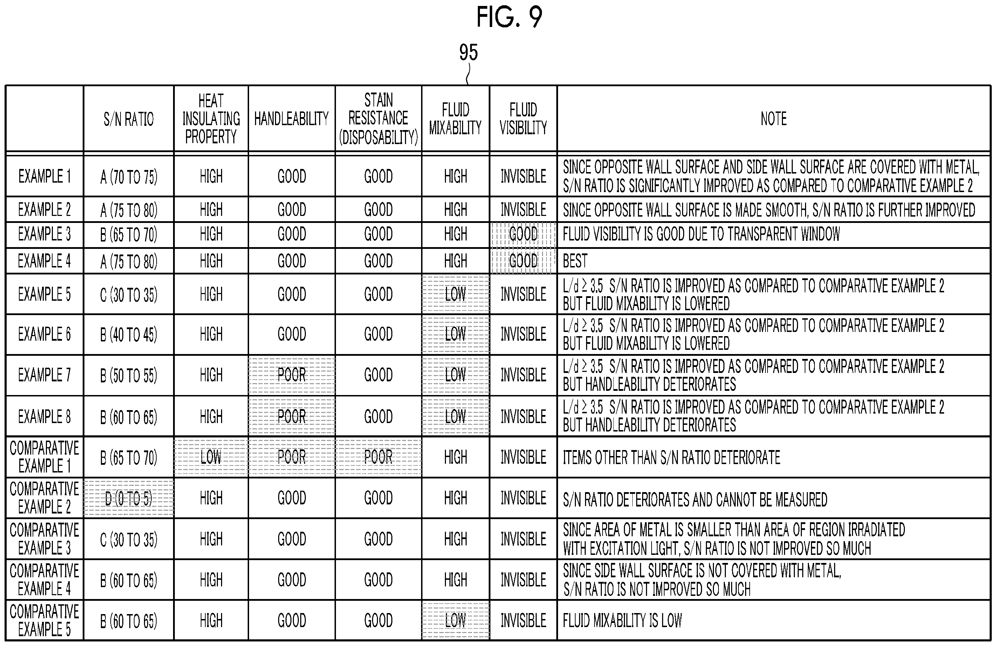

In Examples, the diameter of the ball lens 36 was set to 8 mm, the refractive index thereof was set to 1.77, and the focal length thereof was set to 4.60 mm. Further, the distance d between the first point P1 and the condensing position FP was set to 0.60 mm. Furthermore, the diameter of the excitation light EL incident on the ball lens 36 was set to 3.50 mm, and the flow rate of the culture supernatant liquid 15A was set to 300 cc/min. Then, in a state where the distance L between the first point P1 and the second point P2 was changed or the opposite wall surface 51A and the side wall surfaces 51B were covered or not covered with the metal 53, each example, was evaluated. Fig. 8 shows Table 90 in which items of conditions, such as the material of the main body 35, L/d, and a diameter DE of the excitation light EL on the opposite wall surface 51A, are summarized. Further, Fig. 9 shows Table 95 in which items of evaluation, such as an S/N ratio of the Raman spectral data 27, handleability, and fluid visibility, are summarized. In Fig. 9, "A" of the S/N ratio means excellent, "B" thereof means good, "C" thereof means acceptable, and "D" means unacceptable.

In Example 1, the material of the main body 35 is a resin, the distance L is 1.5 mm, L/d was 2.5, the cross-sectional area of the flow passage 39 as viewed in the direction FD is $1.77 \times 10^{-6}$ $m^2$, and the Reynolds number Re is 4246. Further, in Example 1, a portion covered with the metal 53 is the opposite wall surface 51A and the side wall surfaces 51B, the diameter DE of the excitation light EL on the opposite wall surface 51A is 0.69 mm, and the width of the metal 53 covering the opposite wall surface 51A in the direction FD is 3 mm. Furthermore, in Example 1, the surface roughness Ra of the opposite wall surface 51A is 6.4 $\mu$m, and a transparent portion is not provided.

With regard to evaluation for Example 1, the S/N ratio was in a range of 70 to 75 and evaluated as "A", the heat insulating property was evaluated as "high", handleability was evaluated as "good", stain resistance (disposability) was evaluated as "good", fluid confusability was evaluated as "high", and fluid visibility was evaluated as "invisible".

The reason why the S/N ratio was evaluated as "A" was that the opposite wall surface 51A and the side wall surfaces 51B were covered with the metal 53. The reason why the heat insulating property was evaluated as "high" was that a resin was used as the material of the main body 35. The reason why the handleability was evaluated as "good" was that the distance L was set to 1.5 mm.

The reason why the stain resistance (disposability) was evaluated as "good" was that a resin was used as the material of the main body 35 and the flow cell 10 was used as a single-use product. The reason why the fluid mixability was evaluated as "high" was that the distance L was set to 1.5 mm and the Reynolds number Re was set to 4246. The reason why the fluid visibility was evaluated as "invisible" was that a transparent portion was not provided.

Example 2 is the same as Example 1 except that the surface roughness Ra of the opposite wall surface 51A is set to 1.6 $\mu$m. That is, Example 2 is a case where the surface roughness Ra of the opposite wall surface 51A is set to 1.6 $\mu$m or less. Evaluation for Example 2 was the same as that for Example 1 except that the S/N ratio was in a range of 75 to 80. The reason why the S/N ratio was in the range of 75 to 80 improved from the S/N ratio of Example 1, which was in the range of 70 to 75, was that the surface roughness Ra of the opposite wall surface 51A was set to 1.6 $\mu$m and the opposite wall surface 51A was smoother than that of Example 1.

Example 3 is the same as Example 1 except that a transparent portion is provided. Evaluation for Example 3 was the same as that for Example 1 except that the S/N ratio was in a range of 65 to 70 and the fluid visibility was evaluated as "good". The reason why the fluid visibility was evaluated as "good" was that a transparent portion is provided.

Example 4 is an example in which the surface roughness Ra of the opposite wall surface 51A is set to 1.6 $\mu$m and a transparent portion is provided, that is, an example in which Example 2 and Example 3 are combined with each other. Evaluation for Example 4 was the same as that for Example 1 except that the fluid visibility was evaluated as "good". Example 4 is the best.

Example 5 is an example in which the distance L is set to 3 mm, and the opposite wall surface 51A and the side wall surfaces 51B are not covered with the metal 53. That is, Example 5 is a case where "L/d $\geq$ 3.5" is satisfied. Since the distance L is set to 3 mm, L/d is 5, the cross-sectional area of the flow passage 39 is $7.07 \times 10^{-6}$ $m^2$, the Reynolds number Re is 2123, and the diameter DE of the excitation light EL on the opposite wall surface 51A is 1.83 mm.

Evaluation for Example 5 was the same as that for Example 1 except that the S/N ratio was in a range of 30 to 35 and evaluated as "C" and the fluid mixability was evaluated as "low". The reason why the S/N ratio was in the range of 30 to 35 deteriorated from the S/N ratio of Example 1, which was in the range of 70 to 75, was that the opposite wall surface 51A and the side wall surfaces 51B were not covered with the metal 53. The reason why the fluid mixability was evaluated as "low" was that the Reynolds number Re was 2123 since the distance L was set to 3 mm.

Example 6 is an example in which the distance L is increased to 8 mm from 3 mm of Example 5. That is, Example 6 is also a case where "L/d $\geq$ 3.5" is satisfied as in Example 5. Since the distance L is set to 8 mm, L/d is 13, the cross-sectional area of the flow passage 39 is $5.02 \times 10^{-5}$ $m^2$, the Reynolds number Re is 796, and the diameter DE of the excitation light EL on the opposite wall surface 51A is 5.64 mm.

Evaluation for Example 6 was the same as that for Example 1 except that the S/N ratio was in a range of 40 to 45 and evaluated as "B" and the fluid mixability was evaluated as "low". The reason why the S/N ratio was in the range of 40 to 45 improved from the S/N ratio of Example 5, which was in the range of 30 to 35, was that the distance L was increased to 8 mm from 3 mm. The reason why the fluid mixability was evaluated as "low" was that the Reynolds number Re was 796 since the distance L was set to 8 mm.

Example 7 is an example in which the distance L is increased to 20 mm from 8 mm of Example 6. Example 7 is also a case where "L/d ≥ 3.5" is satisfied as in Example 5 and the like. Since the distance L is set to 20 mm, L/d is 33, the cross-sectional area of the flow passage 39 is $3.14 \times 10^{-4}$ m², the Reynolds number Re is 318, and the diameter DE of the excitation light EL on the opposite wall surface 51A is 14.77 mm.

Evaluation for Example 7 was the same as that for Examples 5 and the like except that the S/N ratio was in a range of 50 to 55 and evaluated as "B" and the handleability was evaluated as "poor". The reason why the S/N ratio was in the range of 50 to 55 improved from the S/N ratio of Example 6, which was in the range of 40 to 45, was that the distance L was increased to 20 mm from 8 mm. The reason why the handleability was evaluated as "poor" was also that the distance L was increased to 20 mm from 8 mm.

Example 8 is an example in which the distance L is further increased to 30 mm from 20 mm of Example 7. Example 8 is also a case where "L/d ≥ 3.5" is satisfied as in Example 5 and the like. Since the distance L is set to 30 mm, L/d is 50, the cross-sectional area of the flow passage 39 is $7.07 \times 10^{-4}$ m², the Reynolds number Re is 212, and the diameter DE of the excitation light EL on the opposite wall surface 51A is 22.38 mm.

Evaluation for Example 8 was the same as that for Example 7 except that the S/N ratio was in a range of 60 to 65 and evaluated as "B". The reason why the S/N ratio was in the range of 60 to 65 improved from the S/N ratio of Example 7, which was in the range of 50 to 55, was that the distance L was increased to 30 mm from 20 mm.

Comparative example 1 is an example in which metal is used as the material of the main body 35 instead of a resin and the opposite wall surface 51A and the side wall surfaces 51B are not covered with the metal 53. Others are the same as those of Example 1. With regard to evaluation for Comparative example 1, the S/N ratio was in a range of 65 to 70 and evaluated as "B", the heat insulating property was evaluated as "low", the handleability was evaluated as "poor", the stain resistance (disposability) was evaluated as "poor", the fluid confusability was evaluated as "high", and the fluid visibility was evaluated as "invisible".

The reason why the S/N ratio was evaluated as "B", the heat insulating property was evaluated as "low", and the handleability was evaluated as "poor" was that metal was used as the material of the main body 35. The reason why the stain resistance (disposability) was evaluated as "poor" was that metal was used as the material of the main body 35 and the flow cell 10 was not a single-use product and was repeatedly used.

Comparative example 2 is an example in which the opposite wall surface 51A and the side wall surfaces 51B are not covered with the metal 53 in Example 1. Evaluation for Comparative example 2 was the same as that for Example 1 except that the S/N ratio was in a range of 0 to 5 and evaluated as "D". The reason why the S/N ratio was in the range of 0 to 5 significantly deteriorated from the S/N ratio of Example 1, which was in the range of 70 to 75, was that the opposite wall surface 51A and the side wall surfaces 51B were not covered with the metal 53.

Comparative example 3 is an example in which the width of the metal 53 covering the opposite wall surface 51A is set to 0.5 mm and the diameter DE of the excitation light EL on the opposite wall surface 51A is set to be smaller than 0.69 mm in Example 1. That is, Comparative example 3 is a case where the area of the metal 53 covering the opposite wall surface 51A is equal to or smaller than the area of the region of the opposite wall surface 51A irradiated with the excitation light EL.

Evaluation for Comparative example 3 was the same as that for Example 1 except that the S/N ratio was in a range of 30 to 35 and evaluated as "C". The reason why the S/N ratio was in the range of 30 to 35 significantly deteriorated from the S/N ratio of Example 1, which was in the range of 70 to 75, was that the area of the metal 53 covering the opposite wall surface 51A was set to be equal to or smaller than the area of the region of the opposite wall surface 51A irradiated with the excitation light EL.

Comparative example 4 is an example in which only the opposite wall surface 51A is covered with the metal 53 and the side wall surfaces 51B are not covered with the metal 53 in Example 1. Evaluation for Comparative example 4 was the same as that for Example 1 except that the S/N ratio was in a range of 60 to 65 and evaluated as "B". The reason why the S/N ratio was in the range of 60 to 65 deteriorated from the S/N ratio of Example 1, which was in the range of 70 to 75, was that the side wall surfaces 51B were not covered with the metal 53.

Comparative example 5 is an example in which the distance L is set to 4 mm and the side wall surfaces 51B are not covered with the metal 53 in Example 1. Since the distance L is set to 4 mm, L/d is 6.7, the cross-sectional area of the flow passage 39 is $1.26 \times 10^{-5}$ m², the Reynolds number Re is 1592, and the diameter DE of the excitation light EL on the opposite wall surface 51A is 2.59 mm. In Comparative example 5, the width of the metal 53 covering the opposite wall surface 51A is set to 6 mm.

Evaluation for Comparative example 5 was the same as that for Example 1 except that the S/N ratio was in a range of 60 to 65 and evaluated as "B" and the fluid mixability was evaluated as "low". The reason why the S/N ratio was in the range of 60 to 65 deteriorated from the S/N ratio of Example 1, which was in the range of 70 to 75, was that the side wall surfaces 51B were not covered with the metal 53 as in Comparative example 4. The reason why the fluid mixability was evaluated as "low" was that the Reynolds number Re was 1592 since the distance L was set to 4 mm.

Examples 1 to 4 in which the opposite wall surface 51A and the side wall surfaces 51B were covered with the metal 53 were improved as compared to Comparative example 4 in which only the opposite wall surface 51A was covered with the metal 53 and the side wall surfaces 51B were not covered with the metal 53, in terms of the S/N ratio. Therefore, it was verified that there is an effect capable of reducing an adverse influence of the main body 35 on the Raman spectral data 27 as compared to the related art in a case where the opposite wall surface 51A and the side wall surfaces 51B were covered with the metal 53.

Examples 1 to 4 in which the area of the metal 53 covering the opposite wall surface 51A was larger than the area of the region of the opposite wall surface 51A irradiated with the excitation light EL were improved as compared to Comparative example 3 in which the area of the metal 53 covering the opposite wall surface 51A was equal to or smaller than the area of the region of the opposite wall surface 51A irradiated with the excitation light EL, in terms of the S/N ratio. Therefore, it was verified that there is an effect capable of reducing a concern that the S/N ratio of the Raman spectral data 27 may be reduced in a case where the area of the metal 53 covering the opposite wall surface 51A was set to be larger than the area of the region of the opposite wall surface 51A irradiated with the excitation light EL.

Examples 2 and 4 in which the surface roughness Ra of the opposite wall surface 51A was set to 1.6 $\mu$m were improved as compared to Examples 1 and 3 in which the surface roughness Ra of the opposite wall surface 51A was 6.4 $\mu$m, in terms of the S/N ratio. Therefore, it was verified that there is an effect capable of reducing a concern that the S/N ratio of the Raman spectral data 27 may be reduced in a case where the surface roughness Ra of the opposite wall surface 51A was set to 1.6 $\mu$m or less.

Examples 5 to 8 in which "(L/d) >_ 3.5" and "L ≥ 2.1 mm" were satisfied were improved as compared to Comparative example 2 in which "L/d = 2.5" and "L = 1.5 mm" were satisfied, in terms of the S/N ratio. Therefore, it was verified that there is an effect capable of further reducing an adverse influence of the main body 35 on the Raman spectral data 27 as compared to the related art in a case where "(L/d) >_ 3.5" was satisfied.

The entire opposite wall surface 51A and the entire side wall surfaces 51B may be covered with the metal 53. Not only the opposite wall surface 51A and the side wall surfaces 51B but also the entire wall surface 51 forming the flow passage 39 may be covered with the metal 53. Further, the metal 53 may be interrupted by the opposite wall surface 51A and the side wall surfaces 51B.

Although the ball lens 36 has been exemplified as the optical system, the optical system is not limited thereto. The optical system may be a hemispherical lens, a plano-convex lens, a biconvex lens, a cylindrical lens, or the like.

The first connecting portion 40 and the second connecting portion 41 may be disposed on the lower side of the main body 35, and the flow passage 39 may have a U-shape. The shape of the main body 35 is not limited to a cylindrical shape, and may be a shape of a polygonal prism. The cross-sectional shape of the flow passage 39 is also not limited to a circular shape, and may be an elliptical shape or a rectangular shape. Further, the main body 35 and the like may be made of a composite material such as a carbon fiber reinforced resin.

A substance from which the Raman spectral data 27 is to be measured is not limited to the antibody 17 and the like. The substance from which the Raman spectral data 27 is to be measured may be protein, peptide, nucleic acid (DNA or ribonucleic acid (RNA)), lipid, a virus, a virus subunit, a virus-like particle, and the like other than the antibody 17.

The cell product is not limited to the antibody 17 and the like. Examples of the cell product include cytokine (interferon, interleukin, or the like), hormone (insulin, glucagon, follicle-stimulating hormone, erythropoietin, or the like), a growth factor (insulin-like growth factor (IGF)-1, basic fibroblast growth factor (bFGF), or the like), a blood coagulation factor (a seventh factor, an eighth factor, a ninth factor, or the like), an enzyme (a lysosomal enzyme, a deoxyribonucleic acid (DNA) degrading enzyme, or the like), a fragment crystallizable (Fc) fusion protein, a receptor, albumin, and a protein vaccine. Further, examples of the antibody 17 include a bispecific antibody, an antibody-drug conjugate, a low-molecular-weight antibody, and a sugar-chain-modified antibody.

The physical property data is not limited to the Raman spectral data 27. The physical property data may be infrared absorption spectral data, nuclear magnetic resonance spectral data, ultraviolet visible absorption spectroscopy (UV-Vis) spectral data, or fluorescence spectral data.

The fluid is not limited to the culture supernatant liquid 15A. The fluid may be the cell culture solution 15 from which cells are not yet removed by the cell-removing filter 14. The fluid may be a cell culture solution (so-called culture medium) that does not contain cell products and is not yet supplied to the culture vessel 13. The fluid may be a purified solution that is obtained in a case where the culture supernatant liquid 15A is purified with a chromatography device in the purification unit. The fluid is not limited to the cell culture solution 15, and may be, for example, river water collected to investigate water pollution. The fluid may be a raw material (for example, polystyryllithium, a methanol aqueous solution, and the like) and/or a product (for example, a monomer or a polymer such as polystyrene) in a case where a product, such as a monomer or a polymer (for example, polystyrene or the like), is continuously produced by flow synthesis. Further, the fluid is not limited to liquid and may be gas.

The above various embodiments and/or various modification examples can be combined as appropriate in the technology of the present disclosure. Further, it is natural that the present disclosure is not limited to each embodiment described above and may employ various configurations without departing from the scope.

The description content and the illustrated content described above are detailed descriptions of portions according to the technology of the present disclosure and are merely an example of the technology of the present disclosure. For example, the description of the configuration, functions, actions, and effects having been described above is the description of examples of the configuration, functions, actions, and effects of the portions according to the technology of the present disclosure. Accordingly, it goes without saying that unnecessary portions may be deleted or new elements may be added or replaced in the description contents and shown contents described above without departing from the scope of the technology of the present disclosure. In order to avoid complication and facilitate understanding of the portion according to the technology of the present disclosure, the description related to common general knowledge not requiring special description in order to implement the technology of the present disclosure is omitted in the above description content and illustrated content.

In the present specification, "A and/or B" is synonymous with "at least one of A or B". That is, "A and/or B" may mean only A, may mean only B, or may mean a combination of A and B. In the present specification, the same concept as "A and/or B" is also applied to a case where three or more matters are linked and expressed by "and/or".

All documents, patent applications, and technical standards described in the present specification are incorporated in the present specification by reference to the same extent as in a case where each of the documents, patent applications, technical standards are specifically and individually indicated to be incorporated by reference.

## Claims

1. A flow cell comprising:

   a main body that includes a flow passage through which fluid containing a substance from which physical property data is to be measured flows, and contains a resin; and
   an optical system which is disposed on a part of a wall surface forming the flow passage and condenses measurement light for the physical property data and of which an emission surface for the measurement light is in contact with the fluid flowing through the flow passage,
wherein at least a part of an opposite wall surface that is the wall surface facing the optical system and at least a part of a side wall surface that is the wall surface interposed between the opposite wall surface and the optical system are covered with a metal.

2. The flow cell according to claim 1,
wherein an area of the metal covering the opposite wall surface is larger than an area of a region of the opposite wall surface irradiated with the measurement light.

3. The flow cell according to claim 1 or 2,
wherein a surface roughness of the opposite wall surface is 1.6 $\mu$m or less.

4. The flow cell according to any one of claims 1 to 3,
wherein in a case where a side of the flow passage on which the optical system is disposed is defined as an upper side and a side of the flow passage corresponding to the opposite wall surface is defined as a lower side, the opposite wall surface is a curved surface that is convex toward the lower side.

5. The flow cell according to any one of claims 1 to 4,

   wherein a flow rate of the fluid flowing through the flow passage is 200 cc/min or more, and
   in a case where a distance between a first point at which the emission surface and an optical axis intersect with each other and a second point at which the opposite wall surface and the optical axis intersect with each other is denoted by L, "L $\leq$ 1.5 mm" is satisfied.

6. The flow cell according to any one of claims 1 to 4,
wherein in a case where a distance between a first point at which the emission surface and an optical axis intersect with each other and a condensing position of the measurement light is denoted by d and a distance between the first point and a second point at which the opposite wall surface and the optical axis intersect with each other is denoted by L, "(L/d) >_ 3.5" is satisfied.

7. The flow cell according to claim 6,
wherein "d = 0.6 mm" is satisfied and "L $\geq$ 2.1 mm" is satisfied.

8. The flow cell according to any one of claims 1 to 7,
wherein at least a part of the main body is transparent, and the fluid flowing through the flow passage is visible from an outside.

9. The flow cell according to claim 8,

wherein the transparent portion is a portion not irradiated with the measurement light.

10. The flow cell according to claim 8 or 9, wherein in a case where a distance between a first point at which the emission surface and an optical axis intersect with each other and a second point at which the opposite wall surface and the optical axis intersect with each other is denoted by L, a size of the transparent portion is larger than L.

11. The flow cell according to any one of claims 1 to 10, wherein an outline of a cross-sectional shape of the flow passage as viewed in a direction in which the fluid flows is a curve.

12. The flow cell according to any one of claims 1 to 11, wherein a resin content of the main body is 95% or more.

13. The flow cell according to any one of claims 1 to 12, wherein the physical property data is Raman spectral data.

14. A flow cell comprising:

a main body that includes a flow passage through which fluid containing a substance from which physical property data is to be measured flows, and contains a resin; and
an optical system which is disposed on a part of a wall surface forming the flow passage and condenses measurement light for the physical property data and of which an emission surface for the measurement light is in contact with the fluid flowing through the flow passage,
wherein in a case where a distance between a first point at which the emission surface and an optical axis intersect with each other and a condensing position of the measurement light is denoted by d and a distance between the first point and a second point at which an opposite wall surface that is the wall surface facing the optical system and the optical axis intersect with each other is denoted by L, "(L/d) ≥ 3.5" is satisfied.

15. A measuring method of measuring the physical property data using the flow cell according to any one of claims 1 to 14.

16. The measuring method according to claim 15, wherein the fluid is a cell culture solution.

17. The measuring method according to claim 16, wherein the cell culture solution contains a cell product as the substance.

18. The measuring method according to claim 16 or 17, wherein the cell culture solution is obtained from a culture vessel in which culture is being performed.

19. The measuring method according to any one of claims 16 to 18, wherein the cell culture solution is a solution from which cells have been removed.

# FIG. 1

RAMAN SPECTRAL DATA

| WAVE NUMBER (cm⁻¹) | INTENSITY |
|---|---|
| 500 | 100 |
| 501 | 110 |
| 502 | 120 |
| ⋮ | ⋮ |
| 1000 | 60 |
| 1001 | 65 |
| ⋮ | ⋮ |
| 2999 | 788 |
| 3000 | 790 |

FLOW RATE OF 200 cc/min OR MORE

EP 4 484 922 A1

# FIG. 2

38

10

37

18

40

36

46

44  42

35

39

41

43

RESIN CONTENT
OF 95% OR MORE

FD

45

19

FIG. 3

SURFACE ROUGHNESS OF 1.6 μm OR LESS

FIG. 4

EP 4 484 922 A1

# FIG. 5

36

52

FP

EL

AREA OF METAL COVERING
OPPOSITE WALL SURFACE >
AREA OF REGION OF OPPOSITE WALL
SURFACE IRRADIATED WITH EXCITATION LIGHT

51A    53

OA    60

FD

# FIG. 6

$$(L/d) \geq 3.5$$
$$(d = 0.6 \text{ mm} \quad L \geq 2.1 \text{ mm})$$

EP 4 484 922 A1

# FIG. 7

PORTION NOT IRRADIATED
WITH EXCITATION LIGHT

81

82

39

80

38

35

41

43

WL

WL > L

FD

## FIG. 8

**COMMON CONDITION**

DIAMETER OF LENS = 8 mm  REFRACTIVE INDEX = 1.77  FOCAL LENGTH = 4.60 mm  DISTANCE d = 0.60 mm
DIAMETER OF EXCITATION LIGHT = 3.50 mm  FLOW RATE = 300 cc/min

90

| | MATERIAL OF MAIN BODY | DISTANCE L [mm] | L/d | CROSS-SECTIONAL AREA [m²] | REYNOLDS NUMBER Re | PORTION COVERED WITH METAL | DIAMETER DE OF EXCITATION LIGHT ON OPPOSITE WALL SURFACE [mm] | WIDTH OF METAL COVERING OPPOSITE WALL SURFACE [mm] | SURFACE ROUGHNESS Ra OF OPPOSITE WALL SURFACE | TRANSPARENT PORTION |
|---|---|---|---|---|---|---|---|---|---|---|
| EXAMPLE 1 | RESIN | 1.5 | 2.5 | $1.77 \times 10^{-6}$ | 4246 | OPPOSITE WALL SURFACE AND SIDE WALL SURFACE | 0.69 | 3 | 6.4 | NONE |
| EXAMPLE 2 | RESIN | 1.5 | 2.5 | $1.77 \times 10^{-6}$ | 4246 | OPPOSITE WALL SURFACE AND SIDE WALL SURFACE | 0.69 | 3 | 1.6 | NONE |
| EXAMPLE 3 | RESIN | 1.5 | 2.5 | $1.77 \times 10^{-6}$ | 4246 | OPPOSITE WALL SURFACE AND SIDE WALL SURFACE | 0.69 | 3 | 6.4 | PRESENT |
| EXAMPLE 4 | RESIN | 1.5 | 2.5 | $1.77 \times 10^{-6}$ | 4246 | OPPOSITE WALL SURFACE AND SIDE WALL SURFACE | 0.69 | 3 | 1.6 | PRESENT |
| EXAMPLE 5 | RESIN | 3 | 5 | $7.07 \times 10^{-6}$ | 2123 | NONE | 1.83 | – | 6.4 | NONE |
| EXAMPLE 6 | RESIN | 8 | 13 | $5.02 \times 10^{-5}$ | 796 | NONE | 5.64 | – | 6.4 | NONE |
| EXAMPLE 7 | RESIN | 20 | 33 | $3.14 \times 10^{-4}$ | 318 | NONE | 14.77 | – | 6.4 | NONE |
| EXAMPLE 8 | RESIN | 30 | 50 | $7.07 \times 10^{-4}$ | 212 | NONE | 22.38 | – | 6.4 | NONE |
| COMPARATIVE EXAMPLE 1 | METAL | 1.5 | 2.5 | $1.77 \times 10^{-6}$ | 4246 | NONE | 0.69 | – | 6.4 | NONE |
| COMPARATIVE EXAMPLE 2 | RESIN | 1.5 | 2.5 | $1.77 \times 10^{-6}$ | 4246 | NONE | 0.69 | – | 6.4 | NONE |
| COMPARATIVE EXAMPLE 3 | RESIN | 1.5 | 2.5 | $1.77 \times 10^{-6}$ | 4246 | OPPOSITE WALL SURFACE | 0.69 | 0.5 | 6.4 | NONE |
| COMPARATIVE EXAMPLE 4 | RESIN | 1.5 | 2.5 | $1.77 \times 10^{-6}$ | 4246 | OPPOSITE WALL SURFACE | 0.69 | 3 | 6.4 | NONE |
| COMPARATIVE EXAMPLE 5 | RESIN | 4 | 6.7 | $1.26 \times 10^{-5}$ | 1592 | OPPOSITE WALL SURFACE | 2.59 | 6 | 6.4 | NONE |

## FIG. 9

95

| | S/N RATIO | HEAT INSULATING PROPERTY | HANDLEABILITY | STAIN RESISTANCE (DISPOSABILITY) | FLUID MIXABILITY | FLUID VISIBILITY | NOTE |
|---|---|---|---|---|---|---|---|
| EXAMPLE 1 | A (70 TO 75) | HIGH | GOOD | GOOD | HIGH | INVISIBLE | SINCE OPPOSITE WALL SURFACE AND SIDE WALL SURFACE ARE COVERED WITH METAL, S/N RATIO IS SIGNIFICANTLY IMPROVED AS COMPARED TO COMPARATIVE EXAMPLE 2 |
| EXAMPLE 2 | A (75 TO 80) | HIGH | GOOD | GOOD | HIGH | INVISIBLE | SINCE OPPOSITE WALL SURFACE IS MADE SMOOTH, S/N RATIO IS FURTHER IMPROVED |
| EXAMPLE 3 | B (65 TO 70) | HIGH | GOOD | GOOD | HIGH | GOOD | FLUID VISIBILITY IS GOOD DUE TO TRANSPARENT WINDOW |
| EXAMPLE 4 | A (75 TO 80) | HIGH | GOOD | GOOD | HIGH | GOOD | BEST |
| EXAMPLE 5 | C (30 TO 35) | HIGH | GOOD | GOOD | LOW | INVISIBLE | $L/d \geq 3.5$ S/N RATIO IS IMPROVED AS COMPARED TO COMPARATIVE EXAMPLE 2 BUT FLUID MIXABILITY IS LOWERED |
| EXAMPLE 6 | B (40 TO 45) | HIGH | GOOD | GOOD | LOW | INVISIBLE | $L/d \geq 3.5$ S/N RATIO IS IMPROVED AS COMPARED TO COMPARATIVE EXAMPLE 2 BUT FLUID MIXABILITY IS LOWERED |
| EXAMPLE 7 | B (50 TO 55) | HIGH | POOR | GOOD | LOW | INVISIBLE | $L/d \geq 3.5$ S/N RATIO IS IMPROVED AS COMPARED TO COMPARATIVE EXAMPLE 2 BUT HANDLEABILITY DETERIORATES |
| EXAMPLE 8 | B (60 TO 65) | HIGH | POOR | GOOD | LOW | INVISIBLE | $L/d \geq 3.5$ S/N RATIO IS IMPROVED AS COMPARED TO COMPARATIVE EXAMPLE 2 BUT HANDLEABILITY DETERIORATES |
| COMPARATIVE EXAMPLE 1 | B (65 TO 70) | LOW | POOR | POOR | HIGH | INVISIBLE | ITEMS OTHER THAN S/N RATIO DETERIORATE |
| COMPARATIVE EXAMPLE 2 | D (0 TO 5) | HIGH | GOOD | GOOD | HIGH | INVISIBLE | S/N RATIO DETERIORATES AND CANNOT BE MEASURED |
| COMPARATIVE EXAMPLE 3 | C (30 TO 35) | HIGH | GOOD | GOOD | HIGH | INVISIBLE | SINCE AREA OF METAL IS SMALLER THAN AREA OF REGION IRRADIATED WITH EXCITATION LIGHT, S/N RATIO IS NOT IMPROVED SO MUCH |
| COMPARATIVE EXAMPLE 4 | B (60 TO 65) | HIGH | GOOD | GOOD | HIGH | INVISIBLE | SINCE SIDE WALL SURFACE IS NOT COVERED WITH METAL, S/N RATIO IS NOT IMPROVED SO MUCH |
| COMPARATIVE EXAMPLE 5 | B (60 TO 65) | HIGH | GOOD | GOOD | LOW | INVISIBLE | FLUID MIXABILITY IS LOW |

EP 4 484 922 A1

EP 4 484 922 A1

| | | International application No. |
|---|---|---|
| **INTERNATIONAL SEARCH REPORT** | | PCT/JP2023/010195 |

**A. CLASSIFICATION OF SUBJECT MATTER**

*G01N 21/05*(2006.01)i; *G01N 21/65*(2006.01)i
FI: G01N21/05; G01N21/65

According to International Patent Classification (IPC) or to both national classification and IPC

**B. FIELDS SEARCHED**

Minimum documentation searched (classification system followed by classification symbols)

G01N21/00-G01N21/74; G01N15/00-G01N15/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2020-511635 A (MARQMETRIX INC) 16 April 2020 (2020-04-16) | 14 |
| | paragraphs [0028]-[0037], [0040], fig. 1-4 | |
| Y | | 1-13, 15-19 |
| Y | JP 2018-509598 A (ENTEGRIS, INC.) 05 April 2018 (2018-04-05) paragraphs [0059], [0065], [0073]-[0081], fig. 1, 6 | 1-13, 15-19 |
| Y | JP 10-221244 A (TOSOH CORP) 21 August 1998 (1998-08-21) paragraphs [0009]-[0011], fig. 1 | 1-13, 15-19 |
| Y | Microfilm of the specification and drawings annexed to the request of Japanese Utility Model Application No. 72449/1987 (Laid-open No. 181944/1988) (YAMAMOTO CO., LTD.) 24 November 1988 (1988-11-24), p. 3, line 19 to p. 5, line 18, fig. 1, 2 | 8-13, 15-19 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 May 2023** | **16 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

International application No.

**PCT/JP2023/010195**

| Box No. III | Observations where unity of invention is lacking (Continuation of item 3 of first sheet) |

This International Searching Authority found multiple inventions in this international application, as follows:

Document 1: JP 2020-511635 A (MARQMETRIX INC) 16 April 2020 (2020-04-16) paragraphs [0028]-[0037], [0040], fig. 1-4

(Invention 1) Claims 1-13, 15-19
 Claims 1-13 and 15-19 have the special technical feature in which "in the wall surfaces, at least a part of an opposed wall surface which is a wall surface opposed to the optical system and at least a part of a side wall surface which is a wall surface present between the opposed wall surface and the optical system are covered by a metal," and are thus classified as invention 1.

(Invention 2) Claim 14
 Claim 14 shares, with claim 1 classified as invention 1, the common technical feature of a "main body that has a flow passage through which a fluid including a substance for which physical property data is measured flows, the main body including a resin; and an optical system that is disposed on a part of a wall surface forming the flow passage and condenses measurement light for the physical property data, the optical system having a light emission surface of the measurement light in contact with the fluid flowing through the flow passage." However, said technical feature does not make a contribution over the prior art in light of the disclosure of document 1, and thus cannot be said to be a special technical feature. There are no other same or corresponding special technical features between these inventions.
 Claim 14 is not dependent on claim 1. Claim 14 is not substantially identical to or similarly closely related to any of the claims classified as invention 1.
 Therefore, claim 14 cannot be classified as invention 1.
 Claim 14 has the special technical feature in which "in a case where a distance between a first point that intersects an optical axis in the light emission surface and a condensing position of the measurement light is defined as d, and a distance between the first point and a second point that intersects the optical axis in an opposed wall surface which is a wall surface opposed to the optical system in the wall surfaces is defined as L, $(L / d) \geq 3.5$," and is thus classified as invention 2.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

## INTERNATIONAL SEARCH REPORT
### Information on patent family members

International application No.

**PCT/JP2023/010195**

| Patent document cited in search report | | | Publication date (day/month/year) | Patent family member(s) | | | Publication date (day/month/year) |
|---|---|---|---|---|---|---|---|
| JP | 2020-511635 | A | 16 April 2020 | US 2018/0246031 A1 paragraphs [0028]-[0037], [0040], fig. 1-4 WO 2018/160756 A1 EP 3589933 A1 CA 3054803 A1 AU 2018229343 A CN 110366676 A | | | |
| JP | 2018-509598 | A | 05 April 2018 | US 2018/0011003 A1 paragraphs [0118], [0124], [0133]-[0140], fig.1, 6 WO 2016/118431 A1 TW 201629658 A KR 10-2017-0103955 A CN 107250764 A | | | |
| JP | 10-221244 | A | 21 August 1998 | (Family: none) | | | |
| JP | 63-181944 | U1 | 24 November 1988 | (Family: none) | | | |

Form PCT/ISA/210 (patent family annex) (January 2015)

**EP 4 484 922 A1**